# EUROPEAN PATENT APPLICATION

(11) **EP 3 037 929 A1**
(43) Date of publication of application: **29.06.2016**
(21) Application number: 14837764.1
(22) Date of filing: 05.08.2014
(51) Int. Cl.: G06F 3/041, G02C 7/12

(54) **TOUCH SENSOR ELECTRODE INTEGRATED WITH POLARIZING PLATE**

(30) Priority: 23.08.2013 KR 20130100557
(71) Applicant: Dongwoo Fine-Chem Co., Ltd., Iksan-si, Jeollabuk-do 570-977 (KR)
(72) Inventor: YANG, Min Soo, Anyang-si Gyeonggi-do 431-793 (KR); PARK, Dong Pil, Incheon 406-840 (KR); SONG, Byung Hoon, Gunpo-si Gyeonggi-do 435-765 (KR); HA, Kyoung Su, Anyang-si Gyeonggi-do 431-706 (KR)
(74) Representative: Behr, Wolfgang
(86) International application number: PCT/KR2014/007203
(87) International publication number: WO 2015/026076

(57) **Abstract**

The present invention relates to a polarizing-plate-integrated touch-sensing electrode. More specifically, the present invention relates to a polarizing-plate-integrated touch-sensing electrode including at least one sensing pattern disposed on at least one surface of the polarizing plate. The polarizing-plate-integrated touch-sensing electrode may implement a thin-film structure and have excellent visibility.

## Description

### CROSS-REFERENCE TO RELATED APPLICATION

This application claims priority to and the benefit of Korean Patent Application No. 2013-0100557, filed on AUG 23, 2013, the disclosure of which is incorporated herein by reference in its entirety.

### BACKGROUND

### 1. Field of the Invention

The present invention relates to a polarizing-plate-integrated touch-sensing electrode. More specifically, the present invention relates to a polarizing-plate-integrated touch-sensing electrode applicable to a flexible display.

### 2. Discussion of Related Art

Recently, with a rapid development of semiconductor technology, demand for display devices having small sizes, light weights, and low power consumption has been explosively increasing.

In accordance with a trend toward informatization, electronic displays for visually transferring information are appearing in various forms. In particular, the development of portable displays is strongly emerging as a requirement in the development of mobile communication.

Such display devices have changed from cathode-ray tubes (CRTs) to liquid crystal displays (LCDs), plasma display panels (PDPs), organic electroluminescence display (OLEDs), and the like. In particular, as advantages, LCDs have lower power consumption than CRTs, are suitable to being small, light, and thin, and do not emit harmful electromagnetic waves. Thus, LCDs have attracted notice as a next-generation display, and nowadays are being installed in almost all information processing apparatuses requiring display devices.

Recently, studies on flexible displays, which are thinner and lighter than the existing panels, bendable, and fabricated using polymer films instead of glass substrates, are being actively conducted.

The flexible displays may be fabricated in forms of a plastic film LCD, an organic EL, a wearable display, an electronic book, an electronic paper, and the like, and can be applied to a very wide range of products using a display which needs to be resistant to external impact and, especially, bendable or embodied in various shapes in addition to being thin and light, such as a mobile communication terminal display or a portable information communication display.

Meanwhile, in recent years, as the use of a touch screen in which a display panel is further combined with a touch-sensing electrode has been gradually popularized, implementation of a thin film structure is becoming increasingly important.

However, even in the flexible LCD, only the substrate material is replaced from the existing glass substrate to a polymer film substrate, but other materials and components necessary for implementing a display device, such as a polarizing plate and a backlight, are still formed using the same method applied to the glass substrate

For example, in the existing LCD, the thickness of the polarizing plate is in the range of 200 to 400 µm, and a thickness of a single protection film used to protect a polarizer is in the range of 25 to 100 µm. Accordingly, there is a limitation to making the polarizing plate and protection film light, thin, short, and small, and it is difficult to apply the existing LCD to a structure such as a thin card.

In order to solve such problems, Korean Patent Publication No. 2008-0073252 discloses a technology in which a thin structure is achieved by removing a protection film in contact with a liquid crystal cell from a polarizing plate attached to a liquid crystal cell.

### [Citation List]

### [Patent Literature]

1. Korean Patent Publication No. 2008-0073252

### SUMMARY OF THE INVENTION

The present invention is directed to a polarizing-plate-integrated touch-sensing electrode.

The present invention is also directed to a touch screen panel including a touch-sensing electrode having a thin-film structure and providing excellent visibility.

According to an aspect of the present invention, there is provided a polarizing-plate-integrated touch-sensing electrode including at least one sensing pattern disposed on at least one surface of the polarizing plate.

The polarizing plate may be a single-layer polarizer, or a laminate in which a transparent protection film is adhered to at least one surface of the polarizer.

The polarizer may be a coating layer.

When the polarizing plate is a laminate of the polarizer and the protection film, a first sensing pattern and a second sensing pattern may be formed on only one surface of the polarizer or the protection film.

When the polarizing plate is the laminate of the polarizer and the protection film, a first sensing pattern may be formed on one surface of the polarizer and a second sensing pattern is formed on one surface of the protection film.

When polarizing plate is the single-layer polarizer, a first sensing pattern and a second sensing pattern may be formed on only one surface of the polarizer.

When the polarizing plate is the single-layer polarizer, a first sensing pattern may be formed on one surface of the polarizer and a second sensing pattern may be formed on the other surface of the polarizer.

The polarizing-plate-integrated touch-sensing electrode may further include first sensing patterns and a second sensing pattern formed on one surface of the polarizing plate, an insulating layer disposed on the sensing patterns, and a bridge electrode electrically connecting the first sensing patterns spaced apart from each other, on the insulating layer.

The polarizing-plate-integrated touch-sensing electrode may further include a first sensing pattern disposed on one surface of the polarizing plate, and a second sensing pattern disposed on the other surface of the polarizing plate. The polarizing plate may provide electrical insulation between the first sensing pattern and the second sensing pattern.

The differences in refractive index between the polarizing plate and a sensing pattern disposed on one surface of the polarizing plate may be 0.8 or less.

The refractive index of the sensing pattern may be in the range of 1.3 to 2.5.

According to another aspect of the present invention, there is provided a touch screen panel including any one of the above-described polarizing-plate-integrated touch-sensing electrodes.

The polarizing-plate-integrated touch-sensing electrode may include at least one sensing pattern disposed on at least one surface of the polarizing plate. An optical functional film may be adhered to one surface of the polarizing-plate-integrated touch-sensing electrode using an adhesive layer. The difference in refractive index between the adhesive layer and the sensing pattern disposed on an upper surface of the polarizing plate may be 0.3 or less.

The difference in refractive index between the adhesive layer and the sensing pattern disposed on a lower surface of the polarizing plate may be 0.8 or less.

The polarizing-plate-integrated touch-sensing electrode may include a retarder thereunder.

According to the exemplary embodiments of the present invention, the polarizing-plate-integrated touch-sensing electrode may not require an additional substrate for forming a touch-sensing electrode since a touch-sensing electrode layer is directly formed on a polarizing plate. Accordingly, a thin film structure may be achieved.

In addition, the polarizing-plate-integrated touch-sensing electrode according to the exemplary embodiments of the present invention can achieve a thin film structure since a single coating layer of a polarizer is used as the polarizing plate.

In addition, when a first sensing pattern and a second sensing pattern are respectively formed on different surfaces of the polarizing plate in the polarizing-plate-integrated touch-sensing electrode according to the exemplary embodiments of the present invention, the polarizing plate may also function as an insulating film of the sensing patterns. Accordingly, since there is no need for additional insulating layer and a bridge electrode, it is possible to achieve a thin film structure and simplify the manufacturing process.

Further, the polarizing-plate-integrated touch-sensing electrode according to the exemplary embodiments of the present invention may have excellent visibility since the difference in refractive index between the polarizing plate and the sensing pattern is within a specific range.

Further, the polarizing-plate-integrated touch-sensing electrode according to the exemplary embodiments of the present invention can be usefully applied to a flexible display in addition to a normal display since it has a thin film structure as described above.

Further, a touch screen panel including the polarizing-plate-integrated touch-sensing electrode according to the exemplary embodiments of the present invention has excellent visibility since difference in refractive index between an adhesive layer and the sensing pattern of the touch-sensing electrode is within a specific range.

It will be apparent to those skilled in the art that various modifications can be made to the above-described exemplary embodiments of the present invention without departing from the spirit or scope of the invention. Thus, it is intended that the present invention cover all such modifications provided they come within the scope of the appended claims and their equivalents.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is schematic plan view showing a polarizing-plate-integrated touch-sensing electrode according to an exemplary embodiment of the present invention;
FIG. 2 is a schematic cross-sectional view showing a polarizing-plate-integrated touch-sensing electrode according to an exemplary embodiment of the present invention;
FIG. 3 is a schematic cross-sectional view showing an example in which a polarizing plate is formed of a single-layer polarizer according to an embodiment of the inventive concept;
FIG. 4 is a schematic cross-sectional view showing an example in which a laminate of a polarizer and a protection film is used as a polarizing plate according to an embodiment of the inventive concept;
FIG. 5 is a schematic cross-sectional view showing a polarizing-plate-integrated touch-sensing electrode according to another exemplary embodiment of the present invention;
FIG. 6 is a schematic plan view showing a polarizing-plate-integrated touch-sensing electrode according to another exemplary embodiment of the present invention;
FIG. 7 is a schematic cross-sectional view showing an example in which a polarizing plate is formed of a single-layer polarizer according to the other exemplary embodiment of the present invention; and
FIGS. 8 and 9 are schematic cross-sectional views showing other examples in which a polarizing plate is formed of a laminate of a polarizer and a protection film according to exemplary embodiments of the present invention.

### DETAILED DESCRIPTION OF EXEMPLARY EMBODIMENTS

The present invention relates to a touch-sensing electrode including at least one sensing pattern disposed on at least one surface of the polarizing plate. The touch-sensing electrode implements a thin-film structure and has excellent visibility.

Hereinafter, exemplary embodiments of the present invention will be described in detail.

Generally, a touch-sensing electrode includes two types of sensing patterns, that is, an electrode pattern sensing an x-coordinate and an electrode pattern sensing a y-coordinate. In a polarizing-plate-integrated touch-sensing electrode according to an exemplary embodiment of the present invention, at least one of a first sensing pattern and a second sensing pattern is formed on at least one surface of a polarizing plate. Accordingly, since an additional substrate for forming the touch-sensing electrode is not used, a thin film structure may be achieved.

The polarizing plate according to the exemplary embodiment of the present invention may be a single-layer polarizer or a laminate in which a transparent protection film is adhered to at least one surface of the polarizer. Accordingly, the polarizing plate to be described hereinafter according to exemplary embodiments of the present invention may be understood as the single-layer polarizer or the laminate in which the transparent protection film is adhered to at least one surface of the polarizer.

As the polarizer, a polarizer used in the field may be used without any specific limitation. For example, the polarizer may be a coating film obtained by directly coating a substrate with a polymer solution containing polymer resins or a dichroic material. The polarizer coating film may be preferably used when the polarizing plate is formed of the single-layer polarizer.

As the polymer resins for forming the polarizer coating film, for example, polyvinyl alcohol-based resins may be representatively used. The polyvinyl alcohol-based resins may be preferably obtained by saponifying polyvinyl acetate-based resins. As the polyvinyl alcohol-based resins, polyvinyl acetate, which includes homopolymers of vinyl acetate, their copolymers with other monomers copolymerizable with the vinyl acetate, and the like may be used. As the other monomers copolymerizable with the vinyl acetate, unsaturated carboxylic acid-based monomers, unsaturated sulfonic acid-based monomers, olefin-based monomers, vinyl ether-based monomers, acrylamide-based monomers having an ammonium group, and the like may be used.

In addition, the polyvinyl alcohol-based resins may be modified. For example, the polyvinyl alcohol-based resin may be an aldehyde-modified polyvinyl formal or polyvinyl acetal.

The polarizer coating film may be formed by mixing the dichroic material to such polyvinyl alcohol-based resins to form a film.

As the protection film available for the exemplary embodiments of the present invention, a film having excellent transparency, mechanical strength, thermal stability, moisture shielding, and isotropy may be used. As specific examples, films composed of thermoplastic resins, for example, polyester-based resins such as polyethylene terephthalate, polyethylene isophthalate, polyethylene naphthalate, and polybutylene terephthalate, cellulose-based resins such as diacetyl cellulose and triacetyl cellulose, polycarbonate-based resins, acrylic-based resins such as poly methyl (meta) acrylate and polyethyl (meta) acrylate, styrene-based resins such as polystyrene and acrylonitrile-styrene copolymers, polyolefin-based resins such as polyethylene, polypropylene, cyclo-based or norbornene-structured polyolefin, and ethylene-propylene copolymers, vinyl chloride-based resins, amide-based resins such as nylon and aromatic polyamides, imide-based resins, polyether-sulfone-based resins, sulfone-based resins, polyether-ether-ketone-based resins, polyphenylene-sulfide-based resins, vinyl-alcohol-based resins, vinylidene chloride-based resins, vinyl-butyral-based resins, allylate-based resins, polyoxymethylene-based resins, and epoxy-based resins, may be used, and a film composed of a blend of the thermoplastic resins may be used. In addition, a film composed of (meta) acrylic-based, urethane-based, acrylic-urethane-based, epoxy-based, and silicon-based thermoplastic resins or UV-cured resins may be used.

The content of the thermoplastic resins in the protection film of the polarizer may be in the range of 50 to 100 wt%, preferably 50 to 99 wt%, more preferably 60 to 98 wt%, and most preferably 70 to 97 wt%. When the content is less than 50 wt%, the original high transparency of the thermoplastic resins may not be sufficiently expressed.

Such a transparent protection film may include one or more appropriate additives. As the additives, for example, ultraviolet absorbers, antioxidants, lubricants, plasticizers, release agents, anti-coloring agents, flame retardants, nucleating agents, antistatic agents, pigments, colorants, and the like may be used.

In addition, the protection film of the polarizer may be surface-treated as needed. The surface treatment may include a dry treatment, such as a plasma treatment, a corona treatment, and a primer treatment, and a chemical treatment such as an alkali treatment including a saponification treatment.

According to the exemplary embodiment of the present invention, when the polarizing plate is the laminate of the polarizer and the protection film, the at least one sensing pattern formed on the polarizing plate may be formed on only one surface of the polarizer or on only one surface of the protection film of the polarizer, or the first sensing pattern may be formed on one surface of the polarizer and a second sensing pattern may be formed on one surface of the protection film. On the other hand, when the polarizing plate is the single-layer polarizer, both of the sensing patterns may be formed on only one surface of the polarizer, or the first sensing pattern may be formed on one surface of the polarizer and the second sensing pattern may be formed on the other surface of the polarizer.

In addition, as needed, in a polarizing-plate-integrated touch-sensing electrode according to the exemplary embodiment of the present invention, the difference in refractive index between the polarizing plate and the sensing pattern disposed on a surface of the polarizing plate may be 0.8 or less. Since the sensing pattern has a high reflectance, when the difference in reflectance between the sensing pattern and the surroundings is large enough for the sensing pattern to be seen by the human eye, the visibility of the polarizing-plate-integrated touch-sensing electrode may be degraded. According to the exemplary embodiment of the present invention, since the difference in refractive index between the polarizing plate and the sensing pattern disposed on the polarizing plate is 0.8 or less, the difference in reflectance between the sensing pattern and the polarizing plate may be minimized and thereby the visibility of the polarizing-plate-integrated touch-sensing electrode may be improved. Specific values of the refractive indexes of the polarizing plate and the sensing pattern may be adjusted by well-known methods in the field, that is, by controlling a thickness of each layer and using a specific type of each material. In this aspect, the refractive index of the sensing pattern may be preferably in the range of 1.3 to 2.5. When the refractive index of the sensing pattern is within the above range, the difference in refractive index between the sensing pattern and the polarizing plate may be easily within the scope of the present invention, and the effect of improving the visibility may be excellent.

Exemplary embodiments of the present invention will be described in detail below with reference to the accompanying drawings. The drawings are provided to illustrate merely typical or exemplary embodiments of the invention and facilitate the understanding of the invention, and it should be understood that the scope of the present invention is not limited by the accompanying drawings.

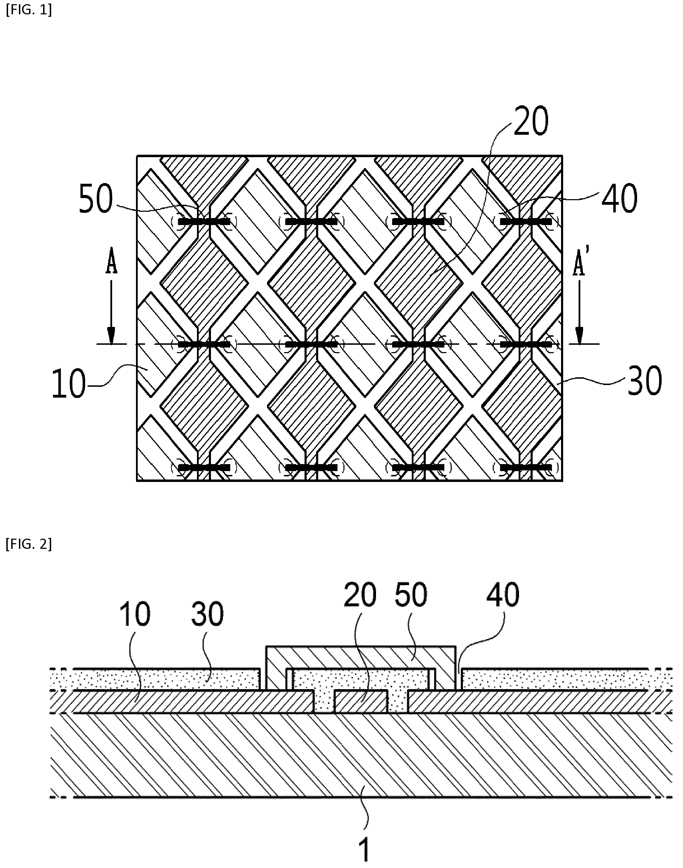

FIG. 1 schematically shows a polarizing-plate-integrated touch-sensing electrode according to an exemplary embodiment of the present invention. The polarizing-plate-integrated touch-sensing electrode shown in FIG. 1 is an exemplary embodiment of the present invention in which both first and second sensing patterns are formed on only one surface of a polarizing plate, and may include a polarizing plate (not shown), first sensing patterns 10, second sensing patterns 20, insulating layers 30, and bridge electrodes 50.

The first sensing patterns 10 and the second sensing patterns 20 may be arranged in different directions and provide information on X and Y coordinates of a touch point. More specifically, when a human hand or an object touches a transparent substrate, a change in capacitance according to the touch point may be transferred to a driving circuit via the first sensing patterns 10, the second sensing patterns 20, and a position detection line. In addition, the change of the capacitance may be converted into an electrical signal by an X and Y input processing circuit (not shown) or the like, and thus the touch point may be identified.

In this regard, the first sensing patterns 10 and the second sensing patterns 20 may be formed on the same surface of the polarizing plate 1, and may need to be electrically connected to each other in order to detect the touch point. Since the second sensing patterns 20 are connected to each other but the first sensing patterns 10 are isolated in the form of islands, additional connection electrodes (bridge electrodes 50) may be required to electrically connect the first sensing patterns 10.

However, the bridge electrodes 50 may be formed on a different layer from the second sensing pattern 20 in order not to be electrically connected to the second sensing patterns 20. FIG. 2 shows an enlarged view of a portion in which the bridge electrode 50 is formed, in a cross-section region taken along line A-A' of FIG. 1.

Referring to FIG. 2, the first sensing patterns 10 and the second sensing pattern 20 formed on the polarizing plate 1 are electrically isolated from each other by the insulating layer 30 formed on the first sensing patterns 10 and the second sensing pattern 20. In addition, as described above, since the first sensing patterns 10 need to be electrically connected to each other, the first sensing patterns 10 may be electrically connected by the bridge electrode 50.

In order to connect the first sensing patterns 10 separated in the form of islands using the bridge electrode 50 while electrically isolating the first sensing patterns 10 from the second sensing patterns 20, contact holes 40 may be formed on the insulating layer 30, and then the additional bridge electrode 50 may be formed.

As the first sensing pattern 10 and the second sensing pattern 20 of the touch-sensing electrode, materials used in the field may be used without any limitation. In order not to inhibit the visibility of an image displayed on a screen, the first sensing pattern 10 and the second sensing pattern 20 may be preferably formed of a transparent material or formed with fine patterns. As specific examples, indium tin oxide (ITO), indium zinc oxide (IZO), zinc oxide (ZnO), indium zinc tin oxide (IZTO), cadmium tin oxide (CTO), poly(3,4-ethylenedioxythiophene) (PEDOT), a carbon nanotube (CNT), a metal wire, or the like may be used. These materials may be used alone or by mixing two or more thereof.

A metal used in the metal wire is not particularly limited, and may be, for example, silver (Ag), gold (Au), aluminum (Al), copper (Cu), iron (Fe), nickel (Ni), titanium (Ti), tellurium (Te), chromium (Cr), or the like. These metals may be used alone or by mixing two or more thereof.

In order to form the sensing patterns 10 and 20 and the insulating layer 30 on the polarizing plate 1, a material having an excellent heat resistance may be used as the polarizing plate 1, or the sensing patterns 10 and 20 and the insulating layer 30 may be formed in a low temperature process, such as a printing method, a coating method, or a low temperature (room temperature) sputtering method.

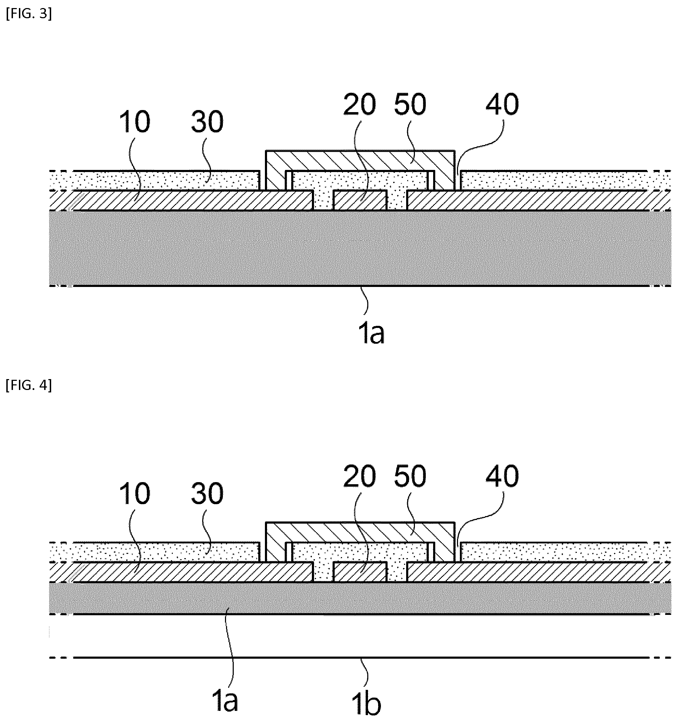

FIG. 3 schematically shows an example in which a single-layer polarizer 1 a is used as the polarizing plate 1 according to an embodiment of the inventive concept. The single-layer polarizer 1 a may be a stretched polymer film or a polarizer film coated on another optical member of a touch screen panel.

FIG. 4 schematically shows an example in which a laminate of a polarizer 1 a and a protection film 1 b is used as the polarizing plate 1 according to another embodiment of the inventive concept. Although a touch-sensing electrode is illustrated as being formed on the polarizer 1 a in FIG. 4, alternatively, the touch-sensing electrode may be formed on the protection film 1 b. In addition, the protection film 1 b may be attached on one surface or both surfaces of the polarizer 1a.

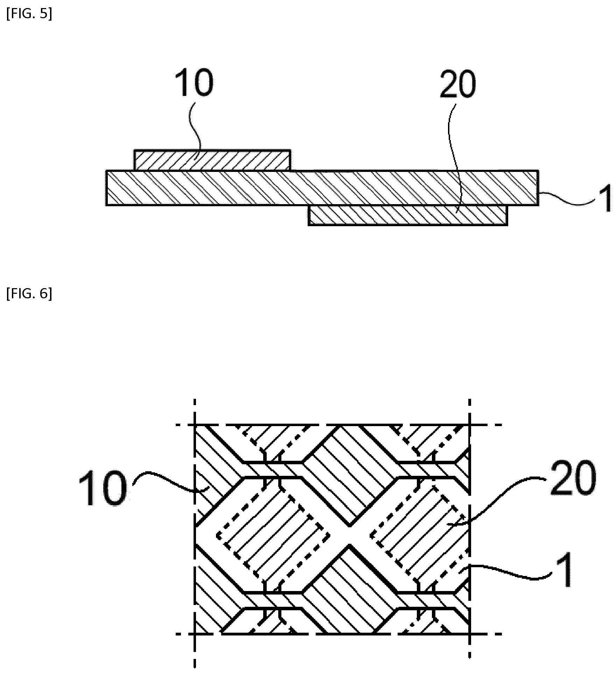

As still another exemplary embodiment of the present invention, FIG. 5 schematically shows an example in which a first sensing pattern 10 and a second sensing pattern 20 of a touch-sensing electrode are respectively formed on different surfaces of a polarizing plate 1.

Referring to FIG. 5, a polarizing-plate-integrated touch-sensing electrode according to the exemplary embodiment of the present invention may have a structure in which the first sensing pattern 10 and the second sensing pattern 20 are respectively formed on different surfaces of the polarizing plate 1. In this way, when the first sensing pattern 10 and the second sensing pattern 20 are respectively formed on different surfaces of the polarizing plate 1, an additional insulating layer may not be required since the first sensing pattern 10 and the second sensing pattern 20 are electrically isolated from each other by the polarizing plate 1, and thus a thin film structure may be implemented.

Further, FIG. 6 is a schematic plan view showing the polarizing-plate-integrated touch-sensing electrode of FIG. 5. When the first sensing pattern 10 and the second sensing pattern 20 are formed on the same plane, a bridge electrode 50 may be required as illustrated in FIG. 2. However, referring to FIG. 6, since different sensing patterns are disposed on different planes according to the embodiment of the present invention, each sensing pattern may have an electrically connected structure without the bridge electrode 50. Accordingly, a thin film structure may be implemented and a process of fabricating a touch-sensing electrode may be remarkably shortened.

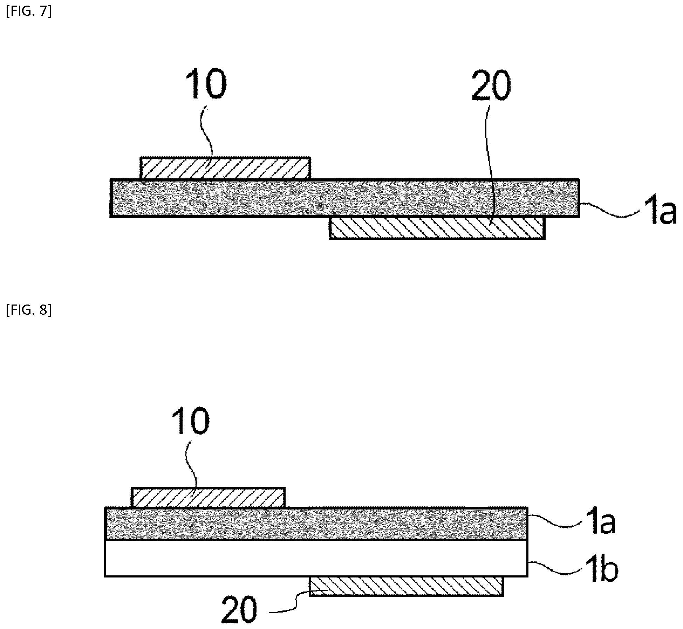

FIG. 7 schematically shows an example in which a single-layer polarizer 1 a is used as a polarizing plate 1 according to an exemplary embodiment of the present invention. The single-layer polarizer 1 a may be a stretched polymer film, or a polarizer layer coated on another optical member of a touch screen panel.

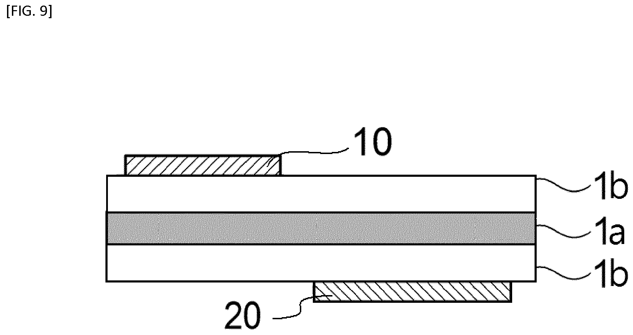

FIGS. 8 and 9 schematically show other examples in which a laminate of a polarizer 1 a and a protection film 1 b is used as a polarizing plate 1 according to exemplary embodiments of the present invention. In FIG. 8, the polarizing plate 1 is formed of a polarizer 1 a and one protection film 1 b attached on one surface of the polarizer 1a. In FIG. 9, protection films 1 b are formed on both surfaces of the polarizer 1a.

The above-described polarizing-plate-integrated touch-sensing electrode according to the exemplary embodiments of the present invention may further include a structure having an a pressure sensitive adhesive layer and a release film sequentially stacked on at least one surface thereof in order to facilitate transportation and attachment to other components later.

The polarizing-plate-integrated touch-sensing electrode according to the exemplary embodiment of the present invention may be formed to be a touch screen panel through an additional process well-known in the field.

For example, an optical functional film may be attached on upper and lower surfaces of the polarizing-plate-integrated touch-sensing electrode according to the exemplary embodiment of the present invention, using an adhesive layer. In this exemplary embodiment of the present invention, the adhesive layer may be referred to as a pressure sensitive adhesive layer or a non-pressure sensitive adhesive layer. In addition, according to the exemplary embodiment of the present invention, the upper surface of the polarizing plate may be referred to as a viewing side with respect to the polarizing plate, and the lower surface of the polarizing plate may be referred to as an opposite side to the viewing side with respect to the polarizing plate.

In this case, when at least one sensing pattern is formed on one surface of the polarizing plate, the difference in refractive index between the adhesive layer and the sensing pattern disposed on an upper surface may be preferably 0.3 or less in terms of lowering a reflectance of the sensing pattern and improving visibility of the sensing pattern.

When the polarizing plate includes the sensing pattern on both an upper surface and a lower surface thereof (that is, a first sensing pattern on the upper surface and a second sensing pattern on the lower surface), the difference in refractive index between the sensing pattern of the upper surface and the adhesive layer thereon may be preferably 0.3 or less as described above, and the difference in refractive index between the sensing pattern of the lower surface and the adhesive layer thereon may be preferably 0.8 or less. When the difference in refractive index between the sensing pattern of the lower surface and the adhesive layer thereon exceeds 0.8, visibility of the sensing pattern of the lower surface may be degraded.

The optical functional film which can be attached to the polarizing-plate-integrated touch-sensing electrode according to the exemplary embodiment of the present invention may be, but not limited thereto, for example, a retarder, an antireflection film, an antifouling film, and a hard coating film. In this case, the retarder may be preferably attached in terms of improving visibility of the sensing pattern, and the retarder may be preferably disposed under the polarizing plate.

Such a touch screen panel according to the exemplary embodiment of the present invention may be combined to a display apparatus, such as a liquid crystal display (LCD), an organic light-emitting diode (OLED), and a flexible display.

Hereinafter, various exemplary embodiments of the present invention are disclosed, but the present invention should not be construed as limited to exemplary embodiments of the present invention set forth herein. While the present invention is shown and described in connection with exemplary embodiments thereof, it will be apparent to those skilled in the art that various modifications can be made without departing from the spirit and scope of the invention.

### Examples 1 to 6 and Comparative Examples 1 to 4

Polarizing-plate-integrated touch-sensing electrodes having refractive indexes listed in Table 1 below were fabricated, and a location-specific average reflectance according to a position of a pattern portion and a non-pattern portion was measured. The pattern portion refers to a portion in which the sensing pattern was formed, and the non-pattern portion refers to a portion in which the sensing pattern was not formed (that is, a portion in which an insulating layer or a polarizing plate is exposed). The average reflectance refers to an average value of reflectance values measured in the range of 400 nm to 700 nm.

**[Table 1]**

| | Polarizing plate (PP) | | First Sensing Pattern | | Insulating Layer | | Second Sensing Pattern | | ΔReflectance (%) |
|---|---|---|---|---|---|---|---|---|---|
| | Type | Refractive Index | Location | Refractive Index | Location | Refractive Index | Location | Refractive Index | |
| Example 1 | a-1 | 1.53 | First Surface of PP | 1.7 | First Surface of PP | 1.53 | First Surface of PP | 1.7 | 0.3% |
| Example 2 | a-1 | 1.53 | First Surface of PP | 2.0 | First Surface of PP | 1.53 | First Surface of PP | 2.0 | 1.7% |
| Example 3 | a-2 | 1.55 | First Surface of PP | 2.3 | First Surface of PP | 1.53 | First Surface of PP | 2.3 | 3.8% |
| Example 4 | a-1 | 1.53 | First Surface of PP | 1.7 | - | - | Second Surface of PP | 1.7 | 0.3% |
| Example 5 | a-2 | 1.55 | First Surface of PP | 2.0 | - | - | Second Surface of PP | 2.0 | 1.6% |
| Example 6 | a-2 | 1.55 | First Surface of PP | 2.3 | - | - | Second Surface of PP | 2.3 | 3.8% |
| Comparative Example1 | a-1 | 1.53 | First Surface of PP | 2.5 | First Surface of PP | 1.53 | First Surface of PP | 2.5 | 5.8% |
| Comparative Example2 | a-2 | 1.55 | First Surface of PP | 2.5 | First Surface of PP | 1.53 | First Surface of PP | 2.5 | 5.8% |
| Comparative Example3 | a-1 | 1.53 | First Surface of PP | 2.5 | - | - | Second Surface of PP | 2.5 | 5.8% |
| Comparative Example4 | a-2 | 1.55 | First Surface of PP | 2.5 | - | - | Second Surface of PP | 2.5 | 5.5% |
| Polarizing plate | | | | | | | | | |
| a-1: (film type, TAC/PVA/COP laminate) | | | | | | | | | |
| a-2: (coating film type, liquid crystal alignment type) | | | | | | | | | |
| First sensing pattern: ITO | | | | | | | | | |
| Second sensing pattern: ITO | | | | | | | | | |
| Insulating layer: organic insulating layer (Refractive index: 1.53) | | | | | | | | | |
| The refractive index and extinction coefficient are based on light having a wavelength of 550 nm. | | | | | | | | | |

Referring to Table 1, examples in which the differences in refractive index between the polarizing plate and the sensing pattern are 0.8 or less have a small difference in reflectance between the pattern portion and the non-pattern portion, and thus have excellent visibility.

### Examples 7 to 12 and Comparative Examples 5 to 7

A polarizing plate was attached to lower surfaces of the polarizing-plate-integrated touch-sensing electrode to have refractive indexes listed in Table 2 using adhesives, and a location-specific average reflectance according to a pattern portion and a non-pattern portion was measured based on a top view in the same manner as in Example 1.

**[Table 2]**

| | Polarizing plate (PP) | | First Sensing Pattern | | Insulating Layer | | Second Sensing Pattern | | Adhesive Layer | ΔReflecta nce (%) (First Electrode/ Adhesive) | ΔReflecta nce (%) (Second Electrode/ Adhesive) |
|---|---|---|---|---|---|---|---|---|---|---|---|
| | Type | Refractive Index | Location | Refractive Index | Location | Refractive Index | Location | Refractive Index | Refractive Index | | |
| Example 7 | a-1 | 1.53 | Upper Surface of PP | 1.56 | Upper Surface of PP | 1.53 | Upper Surface of PP | 1.56 | 1.54 | 0.001% | 0.001% |
| Example 8 | a-2 | 1.55 | Upper Surface of PP | 1.58 | Upper Surface of PP | 1.53 | Upper Surface of PP | 1.58 | 1.66 | 0.06% | 0.06% |
| Example 9 | a-1 | 1.53 | Lower Surface of PP | 1.60 | Lower Surface of PP | 1.53 | Lower Surface of PP | 1.60 | 1.57 | 0.009% | 0.009% |
| Example 10 | a-1 | 1.53 | Upper Surface of PP | 1.55 | - | - | Lower Surface of PP | 1.56 | 1.52 | 0.01% | 0.02% |
| Example 11 | a-2 | 1.55 | Upper Surface of PP | 1.58 | - | - | Lower Surface of PP | 1.60 | 1.52 | 0.04% | 0.07% |
| Example 12 | a-2 | 1.55 | Upper Surface of PP | 1.61 | - | - | Lower Surface of PP | 1.62 | 1.52 | 0.08% | 0.1% |
| Comparative Example 5 | a-1 | 1.53 | Upper Surface of PP | 2.4 | Upper Surface of PP | 1.53 | Upper Surface of PP | 2.4 | 1.67 | 3.2% | 3.2% |
| Comparative Example 6 | a-2 | 1.55 | Lower Surface of PP | 2.4 | Lower Surface of PP | 1.53 | Lower Surface of PP | 2.4 | 1.52 | 5.0% | 5.0% |
| Comparative Example 7 | a-1 | 1.53 | Upper Surface of PP | 2.4 | - | - | Lower Surface of PP | 2.4 | 1.62 | 3.8% | 3.8% |
| Polarizing plate | | | | | | | | | | | |
| a-1: (film type, 1/4λ polycarbonate film ) | | | | | | | | | | | |
| a-2: (coating film type, liquid crystal alignment type) | | | | | | | | | | | |
| First sensing pattern: ITO | | | | | | | | | | | |
| Second sensing pattern: ITO | | | | | | | | | | | |
| Insulating layer: organic insulating layer (Refractive index: 1.53) | | | | | | | | | | | |
| The refractive index and extinction coefficient are based on light having a wavelength of 550 nm. | | | | | | | | | | | |

Referring to Table 2, examples in which the differences in refractive index between the sensing patterns and the adhesive layers are 0.3 or less have a small difference in reflectance between the pattern portion and the non-pattern portion, and thus have excellent visibility.

In addition, examples in which the differences in refractive index between lower sensing patterns and upper adhesive layers are 0.8 or less also have a small difference in reflectance between the pattern portion and the non-pattern portion, and thus have excellent visibility.

## Claims

1. A polarizing-plate-integrated touch-sensing electrode, comprising at least one sensing pattern disposed on at least one surface of the polarizing plate.

2. The polarizing-plate-integrated touch-sensing electrode of claim 1, wherein the polarizing plate is a single-layer polarizer, or a laminate in which a transparent protection film is adhered to at least one surface of the polarizer.

3. The polarizing-plate-integrated touch-sensing electrode of claim 2, wherein the polarizer is a coating layer.

4. The polarizing-plate-integrated touch-sensing electrode of claim 2, wherein when the polarizing plate is a laminate of the polarizer and the protection film, a first sensing pattern and a second sensing pattern are formed on only one surface of the polarizer or the protection film.

5. The polarizing-plate-integrated touch-sensing electrode of claim 2, wherein when the polarizing plate is the laminate of the polarizer and the protection film, a first sensing pattern is formed on one surface of the polarizer and a second sensing pattern is formed on one surface of the protection film.

6. The polarizing-plate-integrated touch-sensing electrode of claim 2, wherein when the polarizing plate is the single-layer polarizer, a first sensing pattern and a second sensing pattern are formed on only one surface of the polarizer.

7. The polarizing-plate-integrated touch-sensing electrode of claim 2, wherein when the polarizing plate is the single-layer polarizer, a first sensing pattern is formed on one surface of the polarizer and a second sensing pattern is formed on the other surface of the polarizer.

8. The polarizing-plate-integrated touch-sensing electrode of claim 1, further comprising:
first sensing patterns and a second sensing pattern formed on one surface of the polarizing plate;
an insulating layer disposed on the sensing patterns; and
a bridge electrode electrically connecting the first sensing patterns spaced apart from each other, on the insulating layer.

9. The polarizing-plate-integrated touch-sensing electrode of claim 1, further comprising:
a first sensing pattern disposed on one surface of the polarizing plate; and
a second sensing pattern disposed on the other surface of the polarizing plate,
wherein the polarizing plate provides electrical insulation between the first sensing pattern and the second sensing pattern.

10. The polarizing-plate-integrated touch-sensing electrode of claim 1, wherein the differences in refractive index between the polarizing plate and a sensing pattern disposed on one surface of the polarizing plate is 0.8 or less.

11. The polarizing-plate-integrated touch-sensing electrode of claim 1, wherein the refractive index of the sensing pattern is in the range of 1.3 to 2.5.

12. A touch screen panel, comprising the polarizing-plate-integrated touch-sensing electrode of any one of claims 1 to 11.

13. The touch screen panel of claim 12, wherein the polarizing-plate-integrated touch-sensing electrode includes at least one sensing pattern disposed on at least one surface of the polarizing plate, an optical functional film is adhered to one surface of the polarizing-plate-integrated touch-sensing electrode using an adhesive layer, and the difference in refractive index between the adhesive layer and the sensing pattern disposed on an upper surface of the polarizing plate is 0.3 or less.

14. The touch screen panel of claim 13, wherein the difference in refractive index between the adhesive layer and the sensing pattern disposed on a lower surface of the polarizing plate is 0.8 or less.

15. The touch screen panel of claim 12, wherein the polarizing-plate-integrated touch-sensing electrode includes a retarder thereunder.

16. The touch screen panel of claim 12, wherein the touch screen panel is adhered to a flexible display.
